# EUROPÄISCHE PATENTANMELDUNG

(11) **EP 3 912 755 A1**
(43) Veröffentlichungstag der Anmeldung: **24.11.2021**
(21) Anmeldenummer: 20175411.6
(22) Anmeldetag: 19.05.2020
(51) Int. Cl.: B23K 9/09, B23K 9/095, B23K 9/12, B23K 9/173, B23K 9/26, B23K 9/29

(54) **VERFAHREN ZUR ERMITTLUNG DES VERSCHLEISSES EINES KONTAKTROHRES WÄHREND EINES ROBOTERGESTÜTZTEN SCHWEISSVERFAHRENS**

(71) Anmelder: FRONIUS INTERNATIONAL GmbH, 4643 Pettenbach (AT)
(72) Erfinder: ARTELSMAIR, Josef, 4643 Pettenbach (AT)
(74) Vertreter: SONN Patentanwälte OG

(57) **Zusammenfassung**

Die Erfindung betrifft ein Verfahren zur Ermittlung des Verschleißes eines Kontaktrohres (5) während eines robotergestützten Schweißverfahrens an einem Werkstück (W) mit abschmelzendem Schweißdraht (6), wobei der Schweißstrom (I) gemessen und über den gemessenen Schweißstrom (I) der Verschleiß des Kontaktrohres (5) festgestellt wird. Zur Verbesserung der Erfassung des Verschleißes des Kontaktrohres (5) ist vorgesehen, dass der gemessene Schweißstrom (I) zu einer gemessenen Schweißspannung (U) ins Verhältnis gesetzt wird, und das Verhältnis des Schweißstroms (I) zur Schweißspannung (U) mit zumindest einem Schwellwert (S_{Si}) verglichen wird, und bei Erreichen zumindest eines Schwellwerts (S_{Si}) eine Warnung ausgegeben wird.

## Beschreibung

Die Erfindung betrifft ein Verfahren zur Ermittlung des Verschleißes eines Kontaktrohres während eines robotergestützten Schweißverfahrens an einem Werkstück mit abschmelzendem Schweißdraht, wobei der Schweißstrom gemessen und über den gemessenen Schweißstrom der Verschleiß des Kontaktrohres festgestellt wird.

Bei Schweißverfahren mit abschmelzendem Schweißdraht, insbesondere MIG (Metall-Inertgas)- und MAG (Metall-Aktivgas)-Schweißen kommt es im Laufe der Zeit zu einem Verschleiß des Kontaktrohres, durch welches der Schweißdraht in Richtung Schweißnaht gefördert wird und in welchem die Übertragung des Schweißstroms zur Bildung des Lichtbogens stattfindet. Durch die Reibung zwischen Schweißdraht und Kontaktrohr wandert der Kontaktpunkt, an dem die Stromübertragung auf den Schweißdraht stattfindet, sukzessive vom Ende des Kontaktrohres, an dem der Schweißdraht aus dem Kontaktrohr austritt, in Richtung der Befestigung des Kontaktrohres am Schweißbrenner. Dadurch kommt es bei gleichbleibendem Abstand zwischen Kontaktrohrende, an dem der Schweißdraht austritt, und der Oberfläche des Werkstücks zu einer Verlängerung des Lichtbogens, wenn der Schweißstrom nicht reduziert wird oder die Drahtvorschubgeschwindigkeit erhöht wird. Die sich einstellende Länge des stromdurchflossenen Teils des Schweißdrahts, also vom Kontaktpunkt im Kontaktrohr, an dem der Strom in den Schweißdraht übergeht, bis zum Ansatz des Lichtbogens, an dem der Schweißdraht schmilzt, hängt vom Material, dem Durchmesser und der Vorschubgeschwindigkeit des Schweißdrahts und der Amplitude des Schweißstroms ab. Dadurch ändert sich bei konstantem Stromfluss durch den Schweißdraht die Lichtbogenlänge, also der Abstand des Endes des Schweißdrahts zum Werkstück. Um diesen Abstand konstant zu halten kann der Schweißstrom und bzw. oder der Drahtvorschub und bzw. oder der Abstand des Kontaktrohrendes verändert werden. Bis zu einem gewissen Grad kann dadurch der Verschleiß des Kontaktrohres, also die Verschiebung des Kontaktpunkts im Kontaktrohr, kompensiert werden. Danach ist ein Tausch des verschlissenen Kontaktrohres notwendig, um den Schweißprozess fortsetzen zu können.

Bei manchen Schweißverfahren, wie zum Beispiel dem Auftragsschweißen (Cladding) sind gleichbleibende Schweißparameter besonders wichtig, um eine konstante Dicke der aufzutragenden Schicht sowie konstante Aufschmelzung des Grundmaterials und somit eine gleichbleibende Schweißqualität zu gewährleisten.

Die EP 1 283 088 A1 beschreibt ein Verfahren zur Ermittlung des Verschleißes eines Kontaktrohres bei einem Schweißverfahren, wobei die Schweißspannung und der Schweißstrom gemessen und aus Mittelwerten der Messwerte ein Austausch-Index berechnet wird. Wenn dieser Austausch-Index einen bestimmten Referenzwert erreicht, wird angezeigt, dass ein Wechsel des Kontaktrohres vorgenommen werden soll.

Die EP 2 686 129 B1 beschreibt ein Verfahren zur Überwachung des Verschleißes eines Kontaktrohres in Echtzeit, wobei die Mittelwerte des Schweißstroms in Bezug auf die Anzahl der geschweißten Nähte überwacht und angezeigt wird. Mit fortschreitender Dauer des Schweißprozesses sinkt der Schweißstrommittelwert infolge des nach hinten in Richtung Schweißbrenner wandernden Kontaktpunktes zwischen Kontaktrohr und Schweißdraht. Unterschreitet der Schweißstrommittelwert vorbestimmte Grenzwerte, wird eine entsprechende Warnung ausgegeben. Bei Schweißverfahren, bei welchen der Schweißstrom auf einen konstanten Wert geregelt wird, ist über den Schweißstrom kein Rückschluss auf den Verschleiß des Kontaktrohres möglich.

Die Aufgabe der vorliegenden Erfindung besteht in der Schaffung eines oben genannten Verfahrens zur Ermittlung des Verschleißes eines Kontaktrohres, welches unabhängig von den geregelten Größen zur Konstanthaltung der Lichtbogenlänge, eine bessere Aussagekraft über den tatsächlichen Verschleiß des Kontaktrohres liefert und möglichst genau anzeigt, wann das Kontaktrohr getauscht werden soll. Das Verfahren soll möglichst einfach und kostengünstig implementiert werden können. Nachteile des Standes der Technik sollen reduziert oder verhindert werden.

Diese Aufgabe wird dadurch gelöst, dass der gemessene Schweißstrom zu einer gemessenen Schweißspannung ins Verhältnis gesetzt wird, und das Verhältnis des Schweißstroms zur Schweißspannung mit zumindest einem Schwellwert verglichen wird, und dass bei Erreichen zumindest eines Schwellwerts eine Warnung ausgegeben wird. Dadurch, dass der Schweißstrom und die Schweißspannung ins Verhältnis gesetzt werden, wird der Leitwert bzw. Widerstand des Lichtbogens für die Beurteilung des Verschleißes des Kontaktrohres verwendet. Dadurch kann ein verlässlicherer Parameter für die Beurteilung des Verschleißes des Kontaktrohres gefunden werden, welcher unabhängig von den oben angeführten Regelgrößen zur Regelung der Lichtbogenlänge ist. Dadurch, dass der Schweißstrom und die Schweißspannung bei einem Schweißprozess ohnedies erfasst werden, ist der Aufwand für die Umsetzung dieses Verfahrens sehr gering und erfordert nur eine entsprechende Programmierung der Steuereinrichtung der Schweißvorrichtung. Da die Spannung nicht direkt am Lichtbogen gemessen werden kann, weil ein Messabgriff am Ende des Schweißdrahtes nicht möglich ist, erfolgt die Messung der Spannung einschließlich des Spannungsabfalls im stromdurchflossenen Schweißdrahtende. Der Schweißstrom ist überall im Schweißkreis (Schweißdraht, Lichtbogen, usw.) gleich. Daher ist das Verhältnis aus Schweißstrom und Schweißspannung nicht direkt der Widerstand oder Leitwert des Lichtbogens. Für die Ermittlung des Verschleißgrades des Kontaktrohres ist es jedoch unerheblich wo die Messung der Schweißspannung erfolgt, da nicht der Absolutwert des Widerstands oder Leitwerts, sondern dessen Änderung über die Schweißdauer bewertet wird. Es kann daher die Schweißspannung an den Ausgangsanschlüssen der Stromquelle oder auch direkt zwischen Kontaktrohr und Masseanschluss am Werkstück bzw. an jeder anderen beliebigen Stelle entlang der Schweißleitungen gemessen werden. Durch das neue Verfahren kann unabhängig vom angewendeten Lichtbogenregelungsverfahren (Schweißstrom, Drahtvorschubgeschwindigkeit und bzw. oder Abstand) der Verschleiß des Kontaktrohres rechtzeitig und verlässlich dem Benutzer angezeigt werden und rechtzeitig ein Tausch des Kontaktrohres vorgenommen werden, sodass das Schweißverfahren mit hoher Qualität fortgesetzt werden kann.

Die Messung des Schweißstroms und der Schweißspannung erfolgt vorzugsweise zu einem Zeitpunkt, zu dem der Schweißstrom einen Maximalwert aufweist, um das Verhältnis, also den Widerstand oder den Leitwert möglichst genau bestimmen zu können. Bei einem Pulsprozess stellt sich nach einer Stromanstiegsrampe üblicherweise am Ende der Pulsphase der höchste Stromwert ein. Zu diesem Zeitpunkt gehen die Spannungsabfälle an der Schweißkreisinduktivität gegen Null, weil die Stromänderung di/dt=0 wird. Somit ist der ideale Messzeitpunkt jener, zu dem sich das maximale Stromniveau eingestellt hat. Von diesem Zeitpunkt kann eine Mittelung mehrerer über eine Zeitspanne davor aufgenommener Messwerte vorgenommen werden (siehe unten). Auch bei anderen Schweißprozessen, wie zum Beispiel kurzschlussbehafteten Lichtbogenschweißprozessen ist ebenfalls der Zeitpunkt des maximalen Schweißstroms optimal. Der maximale Schweißstrom während einer Lichtbogenphase tritt üblicherweise nach dem Ende einer Kurzschlussphase auf. Die Messung kann zum jeweiligen idealen Zeitpunkt durch den Kurzschluss getriggert werden, also eine vorgegebene Zeitspanne nach Aufbruch des Kurzschlusses bzw. wenn innerhalb eines vorgegebenen Zeitfensters kein Kurzschluss festgestellt wird zyklisch wiederkehrend in vorgegebenen Zeitabständen.

Gemäß einem weiteren Merkmal der Erfindung wird das Verhältnis des gemessenen Schweißstroms zur gemessenen Schweißspannung über die Zeit gemittelt. Dadurch kann das Signal entsprechend geglättet werden und eine Fehlbeurteilung des Verschleißes des Kontaktrohres aufgrund einzelner Ausreißer verhindert werden.

Vorzugsweise wird der gemessene Schweißstrom durch die gemessene Schweißspannung dividiert und ein Leitwert gebildet, und der Leitwert mit zumindest einer Leitwertschwelle verglichen, und bei Erreichen zumindest einer Leitwertschwelle die Warnung ausgegeben. Der ermittelte Leitwert des Lichtbogens sinkt mit fortschreitendem Verschleiß des Kontaktrohres, wodurch der Verschleiß des Kontaktrohres durch Unterschreitung einer vorgegebenen Leitwertschwelle verlässlich angezeigt werden kann. Natürlich kann durch Vorsehen mehrerer Schwellwerte für den Leitwert auch eine Abstufung des Verschleißes angezeigt werden. Beispielsweise kann durch Einziehen einer ersten, oberen Schwelle für den Leitwert ein erster einsetzender Verschleiß des Kontaktrohres, durch eine zweite, mittlere Schwelle für den Leitwert ein fortschreitender Verschleiß des Kontaktrohres und eine dritte, untere Schwelle für den Leitwert ein unzulässiger Verschleiß des Kontaktrohres und ein zwingender Tausch desselben angezeigt und vermittelt werden. Die einzelnen Schwellen dienen also zur Generierung von Meldungen beim Erreichen von vorgegebenen Verschleißgraden des Kontaktrohres.

Ebenso kann aber auch die gemessene Schweißspannung durch den gemessenen Schweißstrom dividiert und ein Widerstand gebildet werden, und der Widerstand mit zumindest einer Widerstandsschwelle verglichen werden, und bei Erreichen zumindest einer Widerstandsschwelle die Warnung ausgegeben werden. Analog zum Leitwert wird hier bei Überschreitung zumindest einer Schwelle für den Widerstand ein Verschleiß des Kontaktrohres angezeigt.

Vorteilhafterweise kann der zumindest eine Schwellwert des Leitwerts oder Widerstands eingestellt werden. Dadurch kann aufgrund von Erfahrungswerten oder in Abhängigkeit des jeweiligen Schweißverfahrens eine optimale Anpassung der Vorgabe der Verschleißgrenzen des Kontaktrohres erfolgen. Beispielsweise können die Verschleißgrenzen bei der Fertigung von Werkstücken mit besonders hohen Qualitätsanforderungen kleiner oder niedriger eingestellt werden als bei der Fertigung von Werkstücken mit niedrigeren Qualitätsanforderungen.

Die Warnung kann akustisch, optisch, und bzw. oder taktil ausgegeben werden. Somit kann dem Schweißer oder einer übergeordneten Zentrale in geeigneter Weise der Verschleiß des Kontaktrohres während des Schweißverfahrens vermittelt werden. Bei Vorsehen mehrerer Schwellwerte kann durch Änderung des jeweiligen Warnsignals eine Abstufung bei der Anzeige des Verschleißes des Kontaktrohres erfolgen. Beispielsweise kann durch die Lautstärke oder Frequenz eines akustischen Warnsignals, die Farbe eines optischen Warnsignals oder die Intensität eines taktilen Warnsignals auf den Grad des Verschleißes des Kontaktrohres aufmerksam gemacht werden.

Vorteilhafterweise wird im Falle einer Warnung der Abstand zum Werkstück verringert und dadurch der Verschleiß des Kontaktrohres kompensiert. Auf diese Weise kann eine bestimmte Zeit der Schweißprozess mit im Wesentlichen gleichbleibender Schweißqualität fortgesetzt und die Schweißzeit und Standzeit des Kontaktrohres erhöht werden. Somit kann der Leitwert oder Widerstand für die Abstandsregelung in der Robotersteuerung herangezogen werden, indem die Schwellwerte für die Verschleißgrenzen zur Einstellung des Ist-Werts des Abstands des Schweißbrenners bzw.

Kontaktrohres zum Werkstück verwendet werden. Der letzte Schwellwert als letzte Verschleißgrenze legt den minimalen Abstand der Abstandsregelung fest, wobei gleichzeitig der notwendige Wechsel des Kontaktrohres angezeigt wird.

Wenn zusätzlich während des Schweißprozesses der Abstand zum Werkstück ermittelt wird, kann angezeigt werden, wenn der Schweißbrenner zu nahe am Werkstück angeordnet ist. Der Abstand kann auf verschiedensten Methoden, wie zum Beispiel optischen Methoden, bestimmt werden.

Wenn gemäß einem weiteren Merkmal der Erfindung im Falle einer Warnung eine Schweißung auf einem Referenzblech durchgeführt wird, kann die Beurteilung des Verschleißes des Kontaktrohres über das Verhältnis zwischen Schweißstrom und Schweißspannung noch weiter verbessert und sehr genau überprüft werden. Über die Referenzschweißung kann verifiziert werden, ob sich die tatsächliche freie Schweißdrahtlänge aufgrund eines Verschleißes des Kontaktrohres geändert hat. Dies ist insofern vorteilhaft, da die Referenzschweißung nicht den Toleranzen bezgl. des Kontaktrohrabstandes unterworfen ist, wie dies an den Schweißnähten am Werkstück der Fall sein kann.

Vorteilhafterweise wird der Schweißstrom und die Schweißspannung mit einer Abtastfrequenz von 10 kHz bis 100 kHz gemessen. Derartige Werte haben sich für eine ausreichend hohe Messgenauigkeit und einen begrenzten Verarbeitungsaufwand als geeignet herausgestellt.

Vorzugsweise wird der Schweißstrom und die Schweißspannung über eine Zeitspanne von 1 ms bis 300 ms gemittelt. Durch derartige Mittelungsintervalle können falsche Messergebnisse aufgrund von Ausreißern verhindert bzw. reduziert werden.

Wenn das Verhältnis des Schweißstroms zur Schweißspannung in Abhängigkeit einer Position einer Schweißnaht während des Schweißverfahrens und bzw. oder in Abhängigkeit der Schweißdauer des Schweißverfahrens aufgezeichnet wird, können die Daten für Dokumentationszwecke bereitgestellt werden.

Die vorliegende Erfindung wird anhand der beigefügten Zeichnungen näher erläutert. Darin zeigen
- Fig. 1: ein Blockschaltbild einer Schweißvorrichtung zur Durchführung eines Schweißprozesse mit abschmelzendem Schweißdraht;
- Fig. 2A: ein schematisches Schnittbild durch ein neues Kontaktrohr;
- Fig. 2B: ein schematisches Schnittbild durch ein verschlissenes Kontaktrohr;
- Fig. 3: ein Beispiel für die schematischen zeitlichen Verläufe des Schweißstroms, der Schweißspannung und des Verhältnisses des Schweißstroms zur Schweißspannung, also des Leitwerts;
- Fig. 4: ein Beispiel für die schematischen zeitlichen Verläufe des Schweißstroms, der Schweißspannung und des Verhältnisses der Schweißspannung zum Schweißstrom, also des Widerstands; und
- Fig. 5: ein Beispiel eines realen Verhältnisses des Schweißstroms zur Schweißspannung in Abhängigkeit der Zeit bzw. Schweißdauer.

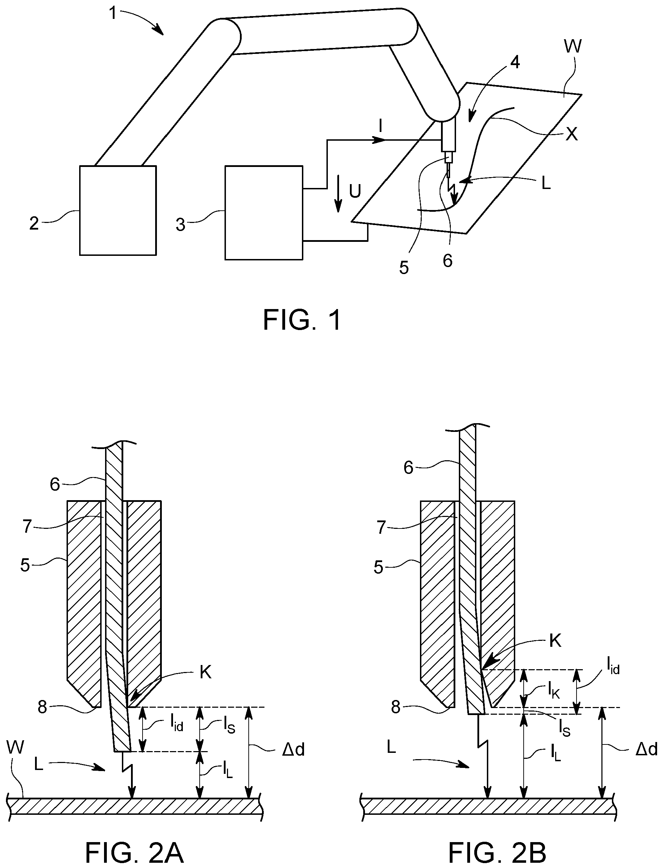

Fig. 1 zeigt ein Blockschaltbild einer Schweißvorrichtung 1 zur Durchführung eines Schweißprozesse mit abschmelzendem Schweißdraht 6, wobei ein Schweißroboter 2 einen Schweißbrenner 4 entlang einer vorgegebenen Schweißbahn x über zumindest ein zu bearbeitendes Werkstück W führt. Der abschmelzende Schweißdraht 6 wird über ein Kontaktrohr 5 im Schweißbrenner zum Werkstück W gefördert. Im Kontaktrohr 5 wird der von der Schweißstromquelle 3 gelieferte Schweißstrom I in den Schweißdraht 6 geleitet, sodass an dessen aus dem Kontaktrohr 5 ragenden Ende während des Schweißprozesses ein Lichtbogen L zum Werkstück W brennt.

Fig. 2A zeigt ein schematisches Schnittbild durch ein neues Kontaktrohr 5. Der abschmelzende Schweißdraht 6 wird durch eine entsprechende Bohrung 7 im Kontaktrohr 5 gefördert. Bei einem neuen Kontaktrohr 5 ist die Bohrung 7 im Wesentlichen zylindrisch, sodass die Kontaktierung des Schweißdrahtes 6 nahe am Ende 8 des Kontaktrohres 5, an dem der Schweißdraht 6 aus dem Kontaktrohr 5 austritt, stattfindet. Der Kontaktpunkt K befindet sich also an der Mündung bzw. am Ende 8 des Kontaktrohres 5. Die Länge l_{id} des stromdurchflossenen Teils des Schweißdrahts 6 entspricht hier der freien Drahtlänge l_{S}, also der Länge des Schweißdrahts 6 vom Ende 8 des Kontaktrohres 5 bis zum Ende des Schweißdrahts 6. Die sich einstellende Länge l_{id} des stromdurchflossenen Teils des Schweißdrahts 6 (vom Kontaktpunkt K bis zum Ende des Schweißdrahts 6, am dem der Lichtbogen ansetzt) ist abhängig vom Material, Durchmesser, der Vorschubgeschwindigkeit des Schweißdrahts 6 und auch vom durch den Schweißdraht 6 fließenden Schweißstrom I. Die Vorschubgeschwindigkeit des Schweißdrahts 6 und der Schweißstrom I werden üblicherweise so eingestellt, dass sich eine gewünschte Länge l_{id} des stromdurchflossenen Schweißdrahts 6 ergibt. Der Abstand Δd des Schweißbrenners 4 bzw. des Endes 8 des Kontaktrohres 5 zum Werkstück W wird so gewählt, dass der Abstand l_{L} des Endes des Schweißdrahts 6 zum Werkstück W für die Bildung des Lichtbogens L geeignet ist und ein stabiler Schweißprozess ablaufen kann. Um den Abstand lL konstant zu halten, können die Parameter, wie die Vorschubgeschwindigkeit des Schweißdrahts 6 und/oder der Schweißstrom I, sowie der Abstand Δd des Schweißbrenners 4 zum Werkstück W verändert werden.

Fig. 2B zeigt ein schematisches Schnittbild durch ein verschlissenes Kontaktrohr 5. Beim verschlissenen Kontaktrohr 5 ist die Bohrung 7 erweitert, da durch den permanenten Stromübergang vom Kontaktpunkt K des Kontaktrohres 5 in den Schweißdraht 6 stetig Material des Kontaktrohres 5 abgetragen wird. Somit findet die Kontaktierung des Schweißdrahtes 6 weiter hinten statt. Der Kontaktpunkt K befindet sich hier also vom Ende 8 des Kontaktrohres 5 um die Distanz l_{K} hinter dem Ende 8 des Kontaktrohres 5. Ohne Änderung der Vorschubgeschwindigkeit des Schweißdrahts 6 und/ oder des Schweißstroms I bleibt die Länge lid des stromdurchflossenen Schweißdrahts 6 gleich, wie beim Beispiel gemäß Fig. 2A und es wird dadurch die freie Drahtlänge l_{S} gegenüber Fig. 2A verkürzt. Somit ist der Abstand l_{L} vom geschmolzenen Ende des Schweißdrahts 6 zur Oberfläche des Werkstücks W um die Distanz l_{K} des Kontaktpunkts K zum Ende 8 des Kontaktrohrs 5 im Vergleich zu Fig. 2A erhöht und der zwischen Ende des Schweißdrahts 6 und Werkstück W brennende Lichtbogen L um diese Distanz l_{K} vom Ende 8 des Kontaktrohrs 5 verlängert. Dies verschlechtert die Schweißeigenschaften, weshalb der Abstand l_{L} wieder auf die Länge entsprechend Fig. 2A verkürzt werden muss.

Eine Verkürzung der Länge des Lichtbogens L bzw. des Abstands l_{L} ist durch folgende drei Regelmethoden (A, B, C) üblich, welche einzeln oder in Kombination zur Kompensation des Verschleiß des Kontaktrohres 5 zum Einsatz kommen können, wobei bei Methode A die Länge l_{id} des stromdurchflossenen Schweißdrahts 6 unverändert bleibt und bei den Methoden B und C erhöht wird:
A.) Durch Reduktion des Abstands Δd des Schweißbrenners 4 bzw. des Endes 8 des Kontaktrohres 5 zum Werkstück W durch eine entsprechende Bewegung des Schweißbrenners 4 mit Hilfe des Schweißroboters 2. Dabei bleibt die Länge l_{id} des stromdurchflossenen Schweißdrahts 6 sowie der Schweißstrom I und auch die Vorschubgeschwindigkeit des Schweißdrahts 6 unverändert. Der Vorteil hierbei ist, dass der Querschnitt der Schweißnaht und die Menge des aufgeschmolzenen Grundmaterials im Wesentlichen gleich bleiben.
B.) Durch Erhöhung der Vorschubgeschwindigkeit des Schweißdrahts 6. Dabei erhöht sich die Länge l_{id} des stromdurchflossenen Schweißdrahts 6 sowie die freie Drahtlänge l_{S} um die Distanz l_{K} des Kontaktpunkts K zum Ende 8 des Kontaktrohres 5. Der Abstand Δd des Schweißbrenners 4 zum Werkstück W bleibt unverändert. Diese Methode bewirkt eine leichte Erhöhung des Querschnitts der Schweißnaht. Die Vorschubgeschwindigkeit des Schweißdrahts 6 wird von der Stromquelle 3 gesteuert bzw. geregelt. Der Vorteil dieser Methode ist, dass der Schweißroboter 2 keine Bewegung ausführen muss, wenn sich der Kontaktpunkt K im Kontaktrohr 5 verändert und die Menge des aufgeschmolzenen Grundmaterials bleibt im Wesentlichen gleich, da der Schweißstrom I unverändert bleibt.
C.) Durch Verringerung des Schweißstroms I. Dabei erhöht sich wie bei Methode B.) die Länge l_{id} des stromdurchflossenen Schweißdrahts 6 sowie die freie Drahtlänge l_{S} um die Distanz l_{K} des Kontaktpunkts K zum Ende 8 des Kontaktrohres 5. Der Abstand Δd bleibt unverändert. Die Verringerung des Schweißstroms I bewirkt eine Verringerung der Menge des aufgeschmolzenen Grundmaterials (geringere Einbrandtiefe). Von Vorteil ist, dass der Schweißroboter 2 keine Bewegung ausführen muss, wenn sich der Kontaktpunkt K im Kontaktrohr 5 verändert und dass der Querschnitt der Schweißnaht im Wesentlichen gleich bleibt, da die Vorschubgeschwindigkeit des Schweißdrahts 6 unverändert bleibt.

Wenn der Verschleiß des Kontaktrohres 5 weiter voranschreitet, wandert der Kontaktpunkt K noch weiter nach hinten. Entsprechend der Grenzen der Regelgrößen der oben beschriebenen Methoden A.), B.) und C.) ist ein Austausch des Kontaktrohrs 5 erforderlich. Erfindungsgemäß wird dies durch die Vorgabe des aus den gemittelten Größen von Schweißstrom I und Schweißspannung U abgeleiteten Widerstands R bzw. Leitwerts G unabhängig von der Kombination der Regelgrößen gemäß den Methoden A.), B.) oder C.) möglich.

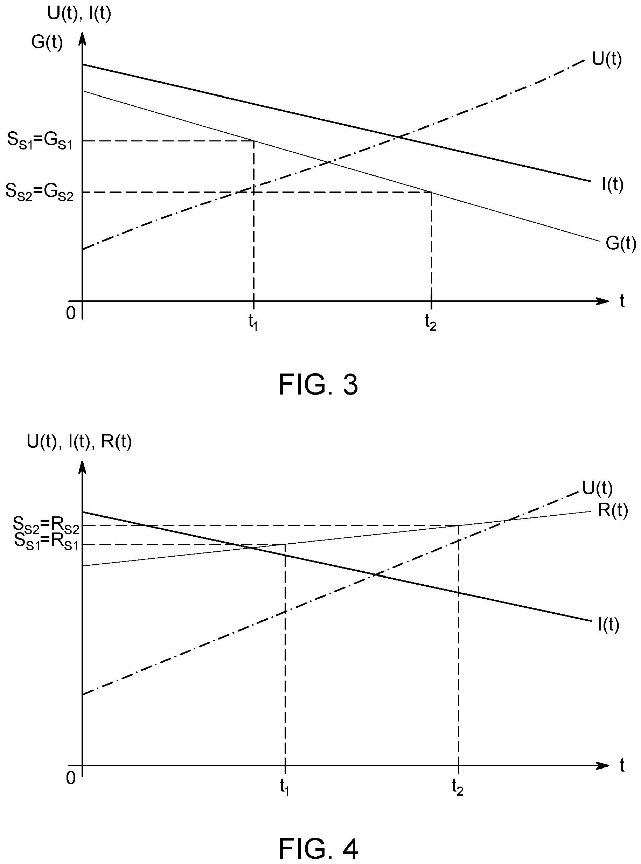

In Fig. 3 ist ein Beispiel für die schematischen zeitlichen Verläufe des Schweißstroms I(t), der Schweißspannung U(t) und des Verhältnisses des Schweißstroms I(t) zur Schweißspannung U(t), also des Leitwerts G(t) bzw. des gespiegelten Widerstands 1/R(t) bei einem Schweißprozess für einen abschmelzbaren Schweißdraht dargestellt. Dabei sind die Istwert-Änderungen des Schweißstroms I(t) und der Schweißspannung U(t) und die daraus abgeleitete Größe des Leitwerts G(t), welche sich beispielsweise bei einer Änderung des Kontaktpunkts K im Kontaktrohr 5 um eine bestimmte Strecke, beispielsweise 6 mm, einstellen, dargestellt. Zwecks Vereinfachung wurde angenommen das die verschleißbedingte Änderung des Kontaktpunktes K im Kontaktrohr 5 linear erfolgt. In der Praxis ist dies meist nicht der Fall, sondern es ändert sich der Kontaktpunkt K eines Kontaktrohres 5 während des Schweißprozesses üblicherweise anfangs schneller und danach langsamer, wodurch sich ein nichtlinearer Zusammenhang ergibt.

Zum Zeitpunkt t=0 ist das Kontaktrohr 5 neu, der Kontaktpunkt K befindet sich sehr nahe am Ende 8 des Kontaktrohres 5 (siehe Fig. 2A) und der Schweißprozess wird mit einer bestimmten Schweißspannung U und einem bestimmten Schweißstrom I durchgeführt. Mit fortschreitender Lichtbogenbrenndauer und somit fortschreitendem Verschleiß des Kontaktrohres 5 tritt eine Verschiebung des Kontaktpunkts K ein und es steigt die Schweißspannung U und es sinkt der Schweißstrom I bei Verwendung einer Spannungsregelung mit fallender Charakteristik (d.h. die Schweißspannung U ist nicht absolut konstant, sondern steigt bei einer Erhöhung des Widerstands R an, wodurch der Schweißstrom I nicht ganz so stark sinkt, wie dies bei Anwendung einer konstanten Spannungsregelung der Fall wäre). Die realen Verläufe sind von vielen Bedingungen und Faktoren, wie dem jeweiligen Schweißprozess, der Regelcharakteristik, der Schweißleistung, dem Drahtmaterial, der Kontaktrohrqualität, usw. abhängig. Erfindungsgemäß wird der gemessene Schweißstrom I durch die gemessene Schweißspannung U dividiert und ein Leitwert G gebildet. Dieser Leitwert G sinkt mit zunehmenden Verschleiß des Kontaktrohres 5 unabhängig davon, wie die Regelung der Lichtbogenlänge (Charakteristik) gestaltet ist (Konstantspannung, Konstantstrom, fallend, ...).

Zur Festlegung von Schwellwerten Sₛᵢ, welche den Grad des Verschleißes des Kontaktrohres 5 anzeigen, werden Referenzschweißungen mit einem neuen Kontaktrohr anhand einer Referenz-Schweißnaht mit unterschiedlichen Abständen Δd durchgeführt. Die unterschiedlichen Abstände Δd dienen dazu, den Verschleißgrad des Kontaktrohres 5 zu simulieren und die Messwerte bzw. Mittelwerte des Schweißstroms I und der Schweißspannung U und deren Verhältnisse davon aufzuzeichnen. Am Ende jeder Referenzschweißung mit den unterschiedlichen Abständen Δd werden diese als Schwellwerte Sₛᵢ festgelegt.

Im dargestellten Beispiel gemäß Fig. 3 sind zwei Leitwertschwellen Gₛᵢ festgelegt, mit welchen der aktuell ermittelte Leitwert G(t) verglichen wird. Die erste Leitwertschwelle G_{S1} entspricht einem mittleren Verschleiß des Kontaktrohres 5, bei dem der Schweißprozess noch fortgesetzt werden kann. Also wird bei Erreichen oder Unterschreiten der ersten Leitwertschwelle G_{S1} zum Zeitpunkt t₁ eine Warnung ausgegeben. Die zweite Leitwertschwelle G_{S2} entspricht einem starken Verschleiß des Kontaktrohres 5, mit dem der Schweißprozess nicht mehr fortgesetzt werden darf. Also erfolgt bei Erreichen oder Unterschreiten der zweiten Leitwertschwelle G_{S2} zum Zeitpunkt t₂ eine dringendere Warnung oder sogar eine Abschaltung des Schweißprozesses.

Fig. 4 zeigt das Beispiel für die schematischen zeitlichen Verläufe des Schweißstroms I, der Schweißspannung U und des Verhältnisses der Schweißspannung U zum Schweißstrom I, also des Widerstands R.

Zum Zeitpunkt t=0 ist das Kontaktrohr 5 neu, der Kontaktpunkt K des Kontaktrohres 5 befindet sich sehr nahe am Ende 8 des Kontaktrohres 5 (siehe Fig. 2A) und der Schweißprozess wird mit einer bestimmten Schweißspannung U und einem bestimmten Schweißstrom I durchgeführt. Mit fortschreitender Lichtbogenbrenndauer und somit fortschreitendem Verschleiß des Kontaktrohres 5 tritt eine Verschiebung des Kontaktpunkts K ein und es steigt die Schweißspannung U und es sinkt der Schweißstrom I bei Verwendung einer Spannungsregelung mit fallender Charakteristik. Erfindungsgemäß wird die gemessene Schweißspannung U durch den gemessenen Schweißstrom I dividiert und ein Widerstand R gebildet. Dieser Widerstand R steigt mit zunehmenden Verschleiß des Kontaktrohres 5 unabhängig davon, wie die Regelung der Lichtbogenlänge (Charakteristik) gestaltet ist.

Im dargestellten Beispiel gemäß Fig. 4 sind zwei Widerstandsschwellen R_{Si} festgelegt, mit welchen der aktuell ermittelte Widerstand R(t) verglichen wird. Die erste Widerstandsschwelle R_{S1} entspricht einem mittleren Verschleiß des Kontaktrohres 5, bei dem der Schweißprozess noch fortgesetzt werden kann. Also wird bei Erreichen oder Überschreiten der ersten Widerstandsschwelle R_{S1} zum Zeitpunkt t₁ eine Warnung ausgegeben. Die zweite Widerstandsschwelle R_{S2} entspricht einem starken Verschleiß des Kontaktrohres 5, mit dem der Schweißprozess nicht mehr fortgesetzt werden kann. Also erfolgt bei Erreichen oder Überschreiten der zweiten Widerstandsschwelle R_{S2} zum Zeitpunkt t₂ eine dringendere Warnung oder sogar eine Abschaltung des Schweißprozesses.

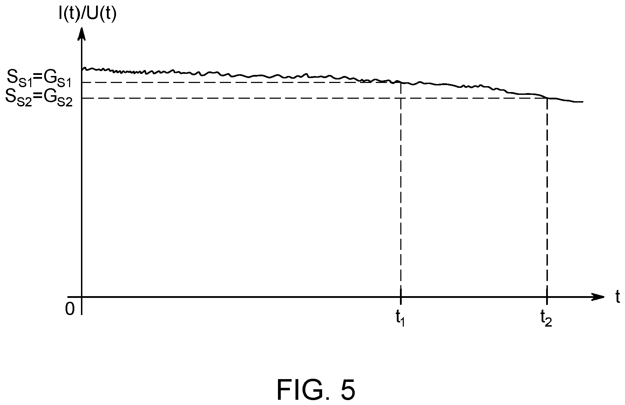

Fig. 5 zeigt ein Beispiel eines realen Verlaufs des Verhältnisses des Schweißstroms I zur Schweißspannung U, also des Leitwerts G, in Abhängigkeit der Zeit t bzw. Schweißdauer oder Anzahl der Schweißnähte. Im Gegensatz zu den vereinfachten Darstellungen gemäß den Figuren 3 und 4 sind hier die Schwankungen des berechneten Signals aufgrund der Schwankungen der Messwerte des Schweißstroms I und der Schweißspannung U erkennbar. Beispielsweise werden der Schweißstrom I und die Schweißspannung U mit einer Abtastfrequenz f_{A} von 10 kHz bis 100 kHz gemessen. Durch entsprechende Mittelwertbildung der Messwerte über eine bestimmte Zeitspanne Δt_{M} von beispielsweise 1 ms bis 300 ms kann eine Glättung des Verlaufs erzielt werden. Wie bereits oben erwähnt, findet die Messung des Schweißstroms I und der Schweißspannung U je nach Schweißprozess vorzugsweise zu einem Zeitpunkt statt, zu dem Schweißstrom I einen Maximalwert Iₘₐₓ aufweist. Dadurch kann das Verhältnis, also den Widerstand R oder den Leitwert G möglichst genau bestimmt werden.

Bei Erreichen oder Unterschreiten der ersten Schwelle G_{S1} für den Leitwert G zum Zeitpunkt t₁ wird eine akustische, optische und bzw. oder taktile Warnung ausgegeben. Bei Erreichen oder Unterschreiten der zweiten Leitwertschwelle G_{S2} zum Zeitpunkt t₂ wird eine Warnung ausgegeben, welche sich von der Warnung bei Unterschreitung der ersten Leitwertschwelle G_{S1} unterscheidet, oder sogar eine Abschaltung des Schweißprozesses vorgenommen und ein Austausch des Kontaktrohres 5 erwirkt.

Die vorliegende Erfindung beschreibt ein zuverlässiges Verfahren zur Ermittlung des Verschleißes eines Kontaktrohres während des Schweißprozesses.

## Patentansprüche

1. Verfahren zur Ermittlung des Verschleißes eines Kontaktrohres (5) während eines robotergestützten Schweißverfahrens an einem Werkstück (W) mit abschmelzendem Schweißdraht (6), wobei der Schweißstrom (I) gemessen und über den gemessenen Schweißstrom (I) der Verschleiß des Kontaktrohres (5) festgestellt wird, **dadurch gekennzeichnet, dass** der gemessene Schweißstrom (I) zu einer gemessenen Schweißspannung (U) ins Verhältnis gesetzt wird, und das Verhältnis des Schweißstroms (I) zur Schweißspannung (U) mit zumindest einem Schwellwert (S_{Si}) verglichen wird, und dass bei Erreichen zumindest eines Schwellwerts (S_{Si}) eine Warnung ausgegeben wird.

2. Verfahren nach Anspruch 1, **dadurch gekennzeichnet, dass** der Schweißstrom (I) und die Schweißspannung (U) zu einem Zeitpunkt gemessen werden, zu dem der Schweißstrom (I) einen Maximalwert (Iₘₐₓ) aufweist, insbesondere am Ende einer Pulsphase bei einem Pulsprozess oder nach dem Ende einer Kurzschlussphase während einer Lichtbogenphase bei einem kurzschlussbehafteten Lichtbogenschweißverfahren.

3. Verfahren nach Anspruch 1 oder 2, **dadurch gekennzeichnet, dass** das Verhältnis des gemessenen Schweißstroms (I) zur gemessenen Schweißspannung (U) über die Zeit gemittelt wird.

4. Verfahren nach einem der Ansprüche 1 bis 3, **dadurch gekennzeichnet, dass** der gemessene Schweißstrom (I) durch die gemessene Schweißspannung (U) dividiert und ein Leitwert (G) gebildet wird, und der Leitwert (G) mit zumindest einer Leitwertschwelle (Gᵢ) verglichen wird, und bei Erreichen zumindest einer Leitwertschwelle (Gᵢ) die Warnung ausgegeben wird.

5. Verfahren nach einem der Ansprüche 1 bis 3, **dadurch gekennzeichnet, dass** die gemessene Schweißspannung (U) durch den gemessenen Schweißstrom (I) dividiert und ein Widerstand (R) gebildet wird, und der Widerstand (R) mit zumindest einer Widerstandsschwelle (Rᵢ) verglichen wird, und bei Erreichen zumindest einer Widerstandsschwelle (Rᵢ) die Warnung ausgegeben wird.

6. Verfahren nach einem der Ansprüche 1 bis 5, **dadurch gekennzeichnet, dass** der zumindest eine Schwellwert (S_{Si}) eingestellt wird.

7. Verfahren nach einem der Ansprüche 1 bis 6, **dadurch gekennzeichnet, dass** die Warnung akustisch, optisch, und bzw. oder taktil ausgegeben wird.

8. Verfahren nach einem der Ansprüche 1 bis 7, **dadurch gekennzeichnet, dass** im Falle einer Warnung der Abstand (Δd) zum Werkstück (W) verringert wird und dadurch der Verschleiß des Kontaktrohres (5) kompensiert wird.

9. Verfahren nach einem der Ansprüche 1 bis 8, **dadurch gekennzeichnet, dass** der Abstand (d) zum Werkstück (W) ermittelt wird.

10. Verfahren nach einem der Ansprüche 1 bis 9, **dadurch gekennzeichnet, dass** im Falle einer Warnung eine Schweißung auf einem Referenzblech durchgeführt wird.

11. Verfahren nach einem der Ansprüche 1 bis 10, **dadurch gekennzeichnet, dass** der Schweißstrom (I) und die Schweißspannung (U) mit einer Abtastfrequenz (f_{A}) von 10 kHz bis 100 kHz gemessen wird.

12. Verfahren nach einem der Ansprüche 1 bis 11, **dadurch gekennzeichnet, dass** der Schweißstrom (I) und die Schweißspannung (U) über eine Zeitspanne (Δt_{M}) von 1 ms bis 300 ms gemittelt wird.

13. Verfahren nach einem der Ansprüche 1 bis 12, **dadurch gekennzeichnet, dass** das Verhältnis des Schweißstroms (I) zur Schweißspannung (U) in Abhängigkeit einer Position (xₛ) einer Schweißnaht während des Schweißverfahrens und bzw. oder in Abhängigkeit der Schweißdauer (tₛ) des Schweißverfahrens aufgezeichnet wird.
